# FASCICULE DE BREVET EUROPEEN

(11) **EP 2 791 238 B1**
(45) Date de publication et mention de la délivrance du brevet: **06.06.2018**
(21) Numéro de dépôt: 12795006.1
(22) Date de dépôt: 05.12.2012
(51) Int. Cl.: C08L 21/00, B60C 1/00, C08L 23/22, C08L 53/00, C08L 9/00

(54) **PNEUMATIQUE POURVU D'UN FLANC EXTERNE A BASE D'UN MELANGE D'UN ELASTOMERE DIENIQUE ET D'UN ELASTOMERE THERMOPLASTIQUE**
REIFEN MIT EINER ÄUSSEREN SEITENWAND MIT EINEM GEMISCH AUS EINEM DIENELASTOMER UND EINEM THERMOPLASTISCHEN ELASTOMER
TYRE PROVIDED WITH AN OUTER SIDEWALL COMPRISING A MIXTURE OF A DIENE ELASTOMER AND A THERMOPLASTIC ELASTOMER

(30) Priorité: 16.12.2011 FR 1161770
(43) Date de publication de la demande: 22.10.2014
(73) Titulaire: Compagnie Générale des Etablissements Michelin, 63000 Clermont-Ferrand (FR)
(72) Inventeur: CUSTODERO, Emmanuel, F-63040 Clermont-Ferrand Cedex 9 (FR); GREIVELDINGER, Marc, F-63040 Clermont-Ferrand Cedex 9 (FR); GUERY, Cyrille, F-63040 Clermont-Ferrand Cedex 9 (FR)
(74) Mandataire: Sidhu, Alban
(86) Numéro de dépôt international: PCT/EP2012/074526
(87) Numéro de publication internationale: WO 2013/087485

(56) Documents cités:
- WO-A1-2006/071959
- WO-A2-02/32994
- FR-A1- 2 954 334

## Description

La présente invention est relative aux bandages pneumatiques et plus particulièrement aux flancs externes de pneumatiques, c'est-à-dire, par définition, aux couches élastomériques situées radialement à l'extérieur du pneumatique, qui sont sont en contact avec l'air ambiant.

En effet, il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse et plus généralement le reste du pneumatique d'un risque d'oxydation dû à la diffusion d'air provenant de l'espace intérieur au bandage pneumatique. On nomme cette couche « couche étanche » et elle couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage et possède un coefficient d'étanchéité tel que la couche peut être qualifiée d'étanche par rapport aux autres couches du pneumatique. De manière usuelle, cette couche étanche est au moins trois fois moins perméable, c'est-à-dire au moins trois fois plus imperméable que les flancs externes.

Le document WO 2008/145277 des Demanderesses propose un objet pneumatique pourvu d'une couche étanche aux gaz de gonflage, dans lequel la couche étanche comporte une composition élastomère comprenant au moins un élastomère thermoplastique copolymère à blocs polystyrène et polyisobutylène et une huile WO02/32994 divulgue un mélange de polymères comprenant: un polymère isobutylène, au moins un polymère diénique, un compatibilisateur comprenant un bloc-graft copolymère d'au moins un segment polyisobutylène.

Ainsi, cette fonction de couche étanche ou « gomme intérieure » ("inner liner") étanche est aujourd'hui remplie par des compositions à base de caoutchouc butyl (copolymère d'isobutylène et d'isoprène), reconnues depuis fort longtemps pour leurs excellentes propriétés d'étanchéité, ou à base d'élastomère thermoplastique copolymère à blocs polystyrènes et polyisobutylène.

Il est connu que les performances des pneumatiques sont optimales pour une pression de gonflage définie. Cette pression de gonflage doit être vérifiée régulièrement par les utilisateurs pour leur permettre d'obtenir les meilleures performances de leurs pneumatiques. Il est donc souhaitable d'améliorer encore l'étanchéite globale des pneumatiques afin d'améliorer la stabilité de performance des pneumatiques dans le temps et d'éviter aux utilisateurs la nécessité de vérifier régulièrement la pression de gonflage de leurs pneumatiques.

Une solution apportée par les demanderesses et permettant d'obtenir des pneumatiques qui présentent une étanchéité améliorée consiste à utiliser de nouvelles compositions de flancs externes, à étanchéité améliorée tout en conservant le niveau attendu de leurs propriétés usuelles par ailleurs.

Comme l'illustrent de nombreux documents parmi lesquels on peut citer les documents EP 1 462 479 B1, EP 1 975 200 A1, EP 1 033 265 B1, EP 1 357 149 A2, EP 1 231 080 A1 et US 4,824,900, les compositions traditionnellement utilisées pour des flancs sont à base de caoutchouc naturel et de caoutchouc synthétique comme le polybutadiène, et de noir de carbone.

L'invention proposée à présent a pour objet un pneumatique pourvu d'un flanc externe, à étanchéité améliorée, ledit flanc externe comprenant au moins une composition de caoutchouc comportant au moins, un ou plusieurs élastomères diéniques, à un taux total de 1 à 99 pce (parties en poids pour cent parties d'élastomère), un ou plusieurs élastomères thermoplastiques à bloc polyisobutylène, à un taux total de 1 à 99 pce, optionnellement une charge renforçante à un taux de 0 à 120 pce et un système de réticulation,
dans lequel la composition de caoutchouc dudit flanc externe, ne comprend pas d'élastomère polyisobutylénique, ou en comprend moins de 15 pce.

En effet, de manière surprenante, ce flanc externe possède une meilleure étanchéité tout en conservant ses autres propriétés par rapport à une composition classique de flanc externe.

De préférence également, l'invention concerne un pneumatique tel que défini précédemment, dans lequel le taux d'élastomère thermoplastique à bloc polyisobutylène est de 1 à 80 pce, de préférence de 1 à 60 pce.

Préférentiellement, l'invention concerne un pneumatique tel que défini précédemment, dans lequel le taux d'élastomère thermoplastique à bloc polyisobutylène est de 5 à 60 pce, de préférence de 5 à 50 pce.

Préférentiellement également, l'invention concerne un pneumatique tel que défini précédemment, dans lequel l'élastomère thermoplastique à bloc polyisobutylène comprend, à au moins l'une des extrémités du bloc polyisobutylène, un bloc thermoplastique dont la température de transition vitreuse est supérieure ou égale à 60 °C.

Plus préférentiellement, l'invention concerne un pneumatique tel que défini précédemment, dans lequel le bloc thermoplastique de l'élastomère thermoplastique à bloc polyisobutylène est constitué d'au moins un monomère polymérisé choisi dans le groupe constitué par styrène, méthylstyrènes, para-tertio-butylstyrène, chlorostyrènes, bromostyrènes, fluorostyrènes, para-hydroxy-styrène, et les mélanges de ces monomères.

Plus préférentiellement également, l'invention concerne un pneumatique tel que défini précédemment, dans lequel l'élastomère thermoplastique à bloc polyisobutylène est choisi dans le groupe constitué par les copolymères dibloc styrène/ isobutylène (« SIB »), les copolymères tribloc styrène/ isobutylène/ styrène (« SIBS »), et les mélanges de ces copolymères .

De manière préférentielle, l'invention concerne un pneumatique tel que défini précédemment, dans lequel l'élastomère thermoplastique à bloc polyisobutylène est un copolymère tribloc styrène/ isobutylène/ styrène (« SIBS »).

De manière préférentielle également, l'invention concerne un pneumatique tel que défini précédemment, dans lequel le bloc thermoplastique de l'élastomère thermoplastique à bloc polyisobutylène est constitué d'au moins un monomère polymérisé choisi dans le groupe constitué par l'éthylène, le propylène, l'oxyde d'éthylène, le chlorure de vinyle, l'acénaphthylène, l'indène, le 2-méthylindène, le 3-méthylindène, le 4-méthylindène, les diméthyl-indène, le 2-phénylindène, le 3-phénylindène, le 4-phénylindène, l'isoprène, les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile, le méthacrylate de méthyle, les dérivés cellulosiques et les mélanges de ces composés.

De manière plus préférentielle, l'invention concerne un pneumatique tel que défini précédemment, dans lequel le ou les élastomères diéniques sont choisis dans le groupe constitué par les élastomères diéniques essentiellement insaturés, et les mélanges de ces élastomères. Préférentiellement, le ou les élastomères diéniques sont choisis dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers. Plus préférentiellement encore, le ou les élastomères diéniques sont choisis dans le groupe constitué par les polybutadiènes, les polyisoprènes de synthèse, le caoutchouc naturel, les copolymères de butadiène, les copolymères d'isoprène (tels que les copolymères de butadiène-styrène, les copolymères d'isoprène-butadiène, les copolymères d'isoprène-styrène ou les copolymères d'isoprène-butadiène-styrène) et les mélanges de ces élastomères.

De préférence, l'invention concerne un pneumatique tel que défini précédemment, dans lequel le taux de charge renforçante est de 0 à 90 pce, de préférence de 5 à 80 pce.

Alternativement, de préférence, l'invention concerne un pneumatique tel que défini précédemment, dans lequel le taux de charge renforçante est de 0 à 70 pce, de préférence de 5 à 70 pce.

De préférence également, l'invention concerne un pneumatique tel que défini précédemment, dans lequel la charge renforçante est du noir de carbone et/ou de la silice. Préférentiellement, la charge renforçante majoritaire est du noir de carbone.

De manière préférentielle, l'invention concerne un pneumatique tel que défini précédemment dans lequel le taux d'élastomère diénique est de 60 à 90 pce et le taux d'élastomère thermoplastique à bloc polyisobutylène est de 10 à 40 pce.

L' invention concerne un pneumatique tel que défini précédemment dans lequel la composition de caoutchouc dudit flanc externe, ne comprend pas d'élastomère polyisobutylénique, ou en comprend moins de 15 pce, de préférence moins de 10 pce et plus préférentiellement moins de 5 pce.

L'invention concerne plus particulièrement les bandages pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres véhicules de transport ou de manutention.

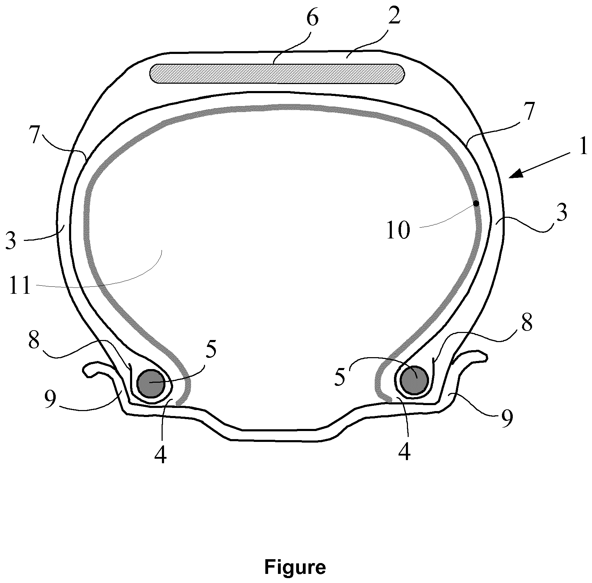

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

### I. DESCRIPTION DETAILLEE DE L'INVENTION

Dans la présente description, sauf indication expresse différente, tous les pourcentages (%) indiqués sont des % en masse.

Par ailleurs, le terme « pce » signifie au sens de la présente demande de brevet, partie en poids pour cent parties d'élastomères, qu'ils soient thermoplastiques ou non thermoplastiques.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### I-1. Composition élastomère de flanc externe

L'objet pneumatique selon l'invention a pour caractéristique essentielle d'être pourvu d'un flanc externe, ledit flanc externe comporte au moins une composition de caoutchouc comportant au moins, un ou plusieurs élastomères diéniques, à un taux total de 1 à 99 pce (parties en poids pour cent parties d'élastomère), un ou plusieurs élastomères thermoplastiques à bloc polyisobutylène, à un taux total de 1 à 99 pce, optionnellement une charge renforçante à un taux de 0 à 120 pce et un système de réticulation, dans lequel la composition de caoutchouc dudit flanc externe, ne comprend pas d'élastomère polyisobutylénique, ou en comprend moins de 15 pce.

### I-1-A. Elastomère diénique essentiellement insaturé

De façon usuelle, on utilise indifféremment dans le texte les termes « élastomère » et « caoutchouc » qui sont interchangeables.

Par élastomère ou caoutchouc « diénique », doit être compris de manière connue un (on entend un ou plusieurs) élastomère issu au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha-oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique essentiellement insaturé, susceptible d'être utilisé dans les flancs externes conformes à l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène.

Bien qu'elle s'applique à tout type d'élastomère diénique essentiellement insaturé, l'homme du métier du pneumatique comprendra que pour une utilisation en flanc externe de pneumatique, la présente invention est de préférence mise en oeuvre avec des élastomères du type (a) ou (b) ci-dessus.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une température de transition vitreuse, Tg, (mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 20°C et - 70°C.

Enfin par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un mode préférentiel de réalisation de l'invention : l'élastomère majoritaire de la composition conforme à l'invention est choisi préférentiellement dans le groupe des élastomères diéniques essentiellement insaturés constitué par les polybutadiènes (en abrégé "BR"), les polyisoprènes (IR) de synthèse, le caoutchouc naturel (NR), les copolymères de butadiène, les copolymères d'isoprène, les copolymères de butadiène-styrène (SBR), les copolymères d'isoprène-butadiène (BIR), les copolymères d'isoprène-styrène (SIR) et les copolymères d'isoprène-butadiène-styrène (SBIR) et les mélanges de ces élastomères.

Le taux d'élastomère diénique dans le flanc externe de pneumatique utile aux besoins de l'invention, est de 1 à 99 pce. Préférentiellement, ce taux est de 20 à 99 pce, plus préférentiellement de 40 à 99 pce, de manière plus préférentielle de 40 à 95 pce. Plus préférentiellement, ce taux est de 50 à 95 pce, en particulier de plus de 50 à 95 pce et encore plus préférentiellement de 60 à 90 pce.

Dans la composition du flanc externe du pneumatique de l'invention, l'elastomère diénique n'est pas mélangé avec une quantité significative d'élastomère polyisobutylénique. Par élastomère polyisobutylénique, on entend le polyisobutylène ou les copolymères statistiques comprenant plus de 80 % en masse de polyisobutylène (le polyisobutylène étant éventuellement halogéné), tel que les caoutchoucs de type butyl. Ainsi, la composition du flanc externe du pneumatique de l'invention ne comprend pas d'élastomère polyisobutylénique, ou alors en comprend moins de 15 pce, de préférence moins de 10 pce et plus préférentiellement moins de 5 pce, afin de ne pas nuire aux propriétés de cohésion de cette composition.

### I-1-B. Élastomère thermoplastique à bloc polyisobutylène

Les élastomères thermoplastiques ont une structure intermédiaire entre polymères thermoplastiques et élastomères. Ils sont constitués de séquences rigides thermoplastiques reliées par des séquences souples élastomères, par exemple polybutadiène, polyisoprène, poly(éthylène/butylène), ou encore polyisobutylène. Ce sont souvent des élastomères triblocs avec deux segments rigides reliés par un segment souple. Les segments rigides et souples peuvent être disposés linéairement, en étoile ou branchés. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique à bloc polyisobutylène (ci-après en abrégé « TPEI ») selon un objet de l'invention comprend, à au moins l'une des extrémités du bloc polyisobutylène, un bloc thermoplastique dont la température de transition vitreuse est supérieure ou égale à 60°C, préférentiellement supérieure ou égale à 100°C, plus préférentiellement supérieure ou égale à 130°C. A titre d'exemple de tels blocs thermoplastiques sur ces élastomères, on peut citer le polystyrène (PS), le polychlorure de vinyle (PVC), le polyméthacrylate de méthyle (PMMA), le polyéthylène (PE), le polypropylène (PP), le polyoxyde d'éthylène (PEO), le poly(acrylonitrile-butabiène-styrène) (ABS), les polymères cellulosiques (nitrocellulose, éthylcellulose, acétate de cellulose ...).

La masse moléculaire moyenne en nombre (notée Mn) de l'élastomère thermoplastique à bloc polyisobutylène est préférentiellement comprise entre 30 000 et 500 000 g/mol, plus préférentiellement comprise entre 40 000 et 400 000 g/mol. En dessous des minima indiqués, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la souplesse du flanc externe. Ainsi, on a constaté qu'une valeur comprise dans un domaine de 50 000 à 300 000 g/mol était particulièrement bien adaptée, notamment à une utilisation de l'élastomère thermoplastique à bloc polyisobutylène ou TPEI dans une composition pour un bandage pneumatique.

La masse moléculaire moyenne en nombre (Mn) du TPEI est déterminée de manière connue, par chromatographie d'exclusion stérique (SEC). L'échantillon est préalablement solubilisé dans du tétrahydrofurane à une concentration d'environ 1 g/l ; puis la solution est filtrée sur filtre de porosité 0,45 µm avant injection. L'appareillage utilisé est une chaîne chromatographique « WATERS alliance ». Le solvant d'élution est le tétrahydrofurane, le débit de 0,7 ml/min, la température du système de 35°C et la durée d'analyse de 90 min. On utilise un jeu de quatre colonnes WATERS en série, de dénominations commerciales « STYRAGEL » (« HMW7 », « HMW6E » et deux «HT6E»). Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'indice de polydispersité Ip (rappel : Ip = Mw/Mn avec Mw masse moléculaire moyenne en poids) du TPEI est de préférence inférieur à 3 ; plus préférentiellement Ip est inférieur à 2 et encore plus préférentiellement inférieur à 1,5.

Le bloc polyisobutylène du TPEI est composé majoritairement du monomère isobutylène polymérisé. Par majoritairement, on entend un taux pondéral en monomère par rapport au poids total du bloc « polyisobutylène » le plus élevé, et de préférence un taux pondéral de plus de 50%, plus préférentiellement de plus de 75%, et par exemple de plus de 85%. De préférence, le bloc polyisobutylène du copolymère TPEI présente une masse moléculaire moyenne en nombre ("Mn") allant de 25 000 g/mol à 350 000 g/mol, de préférence 35 000 g/mol à 250 000 g/mol de manière à conférer à l'élastomère thermoplastique de bonnes propriétés élastomériques et une tenue mécanique suffisante et compatible avec l'application en flanc externe d'un bandage pneumatique.

De préférence, le bloc polyisobutylène du copolymère à blocs présente en outre une température de transition vitreuse ("Tg", mesurée selon ASTM D3418) inférieure ou égale à - 20°C, plus préférentiellement inférieure à - 40°C. Une valeur de Tg supérieure à ces minima peut diminuer les performances du flanc externe lors d'une utilisation à très basse température ; pour une telle utilisation, la Tg du bloc polyisobutylène du copolymère à blocs est plus préférentiellement encore inférieure à - 50°C.

Le bloc polyisobutylène du TPEI peut aussi comprendre avantageusement également un taux d'unités issues d'un ou de plusieurs diènes conjugués insérées dans la chaîne polymérique allant préférentiellement jusqu'à 16% en poids par rapport au poids du bloc polyisobutylène. Au dessus de 16%, on peut observer une baisse de la résistance à la thermooxydation et à l'oxydation à l'ozone du flanc externe contenant l'élastomère thermoplastique à bloc polyisobutylène utilisée dans un pneumatique.

Les diènes conjugués pouvant être copolymérisés avec l'isobutylène pour constituer le bloc polyisobutylène sont des diènes conjugués en C₄ - C₁₄. De préférence, ces diènes conjugués sont choisis parmi l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-néopentylbutadiène, le 1,3-cyclopentadiène, le 1,3-cyclohexadiène, 1-vinyl-1,3-cyclohexadiène ou leur mélange. Plus préférentiellement le diène conjugué est l'isoprène ou un mélange contenant de l'isoprène.

Le bloc polyisobutylène, selon un aspect avantageux d'un objet de l'invention, peut être halogéné et comporter des atomes d'halogène dans sa chaîne. Cette halogénation permet d'augmenter la vitesse de cuisson de la composition comprenant l'élastomère thermoplastique à bloc polyisobutylène selon l'invention. Cette halogénation permet d'améliorer la compatibilité du flanc externe avec les autres éléments adjacents constitutifs d'un bandage pneumatique. L'halogénation se fait au moyen de brome ou de chlore, préférentiellement du brome, sur les unités issues de diènes conjugués de la chaîne polymérique du bloc polyisobutylène. Seule une partie de ces unités réagit avec l'halogène.

Selon un premier mode de réalisation, le TPEI est choisi parmi les élastomères thermoplastiques styréniques à bloc polyisobutylène (« TPSI »).

Le bloc thermoplastique est ainsi constitué d'au moins un monomère polymérisé à base de styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène.

De préférence, l'élastomère thermoplastique TPSI est un copolymère à blocs polystyrène et polyisobutylène.

Préférentiellement, un tel copolymère blocs est un copolymère dibloc styrène/ isobutylène (en abrégé « SIB »).

Préférentiellement également, un tel copolymère blocs est un copolymère tribloc styrène/ isobutylène/ styrène (en abrégé « SIBS »).

Selon un mode de réalisation préférentiel de l'invention, le taux pondéral de styrène (non substitué ou substitué), dans l'élastomère styrénique est compris entre 5% et 50%. En dessous du minimum indiqué, le caractère thermoplastique de l'élastomère risque de diminuer de manière sensible tandis qu'au-dessus du maximum préconisé, l'élasticité du flanc externe peut être affectée. Pour ces raisons, le taux de styrène est plus préférentiellement compris entre 10 et 40%, en particulier entre 15 et 35%.

Les élastomères TPSI sont disponibles commercialement, vendus par exemple en ce qui concerne les SIB et SIBS par la société KANEKA sous la dénomination « SIBSTAR » (e.g. "Sibstar 103T", "Sibstar 102T", "Sibstar 073T" ou "Sibstar 072T" pour les SIBS, "Sibstar 042D" pour les SIB). Ils ont par exemple été décrits, ainsi que leur synthèse, dans les documents brevet EP 731 112, US 4 946 899, US 5 260 383. Ils ont été développés tout d'abord pour des applications biomédicales puis décrits dans diverses applications propres aux élastomères TPSI, aussi variées que matériel médical, pièces pour automobile ou pour électroménager, gaines pour fils électriques, pièces d'étanchéité ou élastiques (voir par exemple EP 1 431 343, EP 1 561 783, EP 1 566 405, WO 2005/103146). Le document WO 2008/145277 des Demanderesses décrit également une utilisation de tels élastomères TPSI en pneumatique, dans des compositions de couche étanche aux gaz de gonflage.

Selon un second mode de réalisation, les élastomères TPEI peuvent aussi comprendre un bloc thermoplastique ayant une Tg supérieure ou égale à 60°C et constitué à partir de monomères polymérisés autres que des monomères styréniques (en abrégé « TPNSI »). De tels monomères peuvent être choisis parmi les composés suivants et leurs mélanges :
- l'éthylène et le propylène ;
- le chlorure de vinyle ;
- l'oxyde d'éthylène ;
- l'acénaphthylène : l'homme de l'art pourra par exemple se référer à l'article de Z. Fodor et J.P. Kennedy, Polymer Bulletin 1992 29(6) 697-705 ;
- l'indène et ses dérivés tels que par exemple le 2-méthylindène, le 3-méthylindène, le 4-méthylindène, les diméthyl-indène, le 2-phénylindène, le 3-phénylindène et le 4-phénylindène ; l'homme de l'art pourra par exemple se référer au document de brevet US4946899, par les inventeurs Kennedy, Puskas, Kaszas et Hager et aux documents J. E. Puskas, G. Kaszas, J.P. Kennedy, W.G. Hager Journal of Polymer Science Part A : Polymer Chemistry (1992) 30, 41 et J.P. Kennedy, N. Meguriya, B. Keszler, Macromolecules (1991) 24(25), 6572-6577 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, .P. Kennedy Applied Polymer Science (1990) 39(1) 119-144 et J.E. Puskas, G. Kaszas, J.P. Kennedy, Macromolecular Science, Chemistry A28 (1991) 65-80 ;
- les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile et leurs mélanges. On peut citer plus particulièrement, l'acrylate d'adamantyle, le crotonate d'adamantyle, le sorbate d'adamantyle, l'acrylate de 4-biphenylyle, l'acrylate de tertio-butyle, l'acrylate de cyanométhyle, l'acrylate de 2-cyanoéthyle, l'acrylate de 2-cyanobutyle, l'acrylate de 2-cyanohexyle, l'acrylate de 2-cyanoheptyle, l'acrylate de 3,5-diméthyladamantyle, le crotonate de 3,5-diméthyladamantyle, l'acrylate d'isobornyle, l'acrylate de pentachlorobenzyle, l'acrylate de pentaflurobenzyle, l'acrylate de pentachlorophényle, l'acrylate de pentafluorophényle, le méthacrylate d'adamantyle, le méthacrylate de 4-tert-butylcyclohexyle, le méthacrylate de tert-butyle, le méthacrylate de 4-tert-butylphényle, le méthacrylate de 4-cyanophényle, le méthacrylate de 4-cyanométhylphényle, le méthacrylate de cyclohexyle, le méthacrylate de 3,5-diméthyladamantyle, le méthacrylate de diméthylaminoéthyle, le méthacrylate de 3,3-diméthylbutyle, l'acide méthacrylique, le méthacrylate de méthyle, le méthacrylate d'éthyle, le méthacrylate de phényle, le méthacrylate d'iso-bornyle, le méthacrylate de tétradécyle, le méthacrylate de triméthylsilyle, le méthacrylate de 2,3-xylényle, le méthacrylate de 2,6-xylényle, l'acrylamide, le N-sec-butylacrylamide, le N-tert-butylacrylamide, le N,N-diisopropylacrylamide, le N-1méthylbutylacrylamide, le N-méthyl-N-phénylacrylamide, le morpholylacrylamide, le piperidylacrylamide, le N-tert-butylméthacrylamide, le 4-butoxycarbonylphénylméthacrylamide, le 4-carboxyphénylméthacrylamide, le 4-méthoxycarbonylphénylméthacrylamide, le 4-éthoxycarbonylphénylméthacrylamide, le cyanoacrylate de butyle, le chloroacrylate de méthyle, le chloroacrylate d'éthyle, le chloroacrylate d'isopropyle, le chloroacrylate d'isobutyle, le chloroacrylate de cyclohexyle, le fluorométhacrylate de méthyle, le phénylacrylate de méthyle, l'acrylonitrile, le méthacrylonitrile, et leurs mélanges.

Selon un autre mode de réalisation, les élastomères TPEI peuvent aussi comprendre un bloc thermoplastique ayant une Tg supérieure ou égale à 60°C et constitué à partir de monomères polymérisés styréniques et non styréniques choisis parmi les monomères listés précédemment. Par exemple, et à titre préférentiel, le bloc thermoplastique peut être constitué d'un copolymère acrylonitrile-butadiène-styrène (ABS).

Selon une variante, le monomère polymérisé autre qu'un monomère styrénique peut être copolymérisé avec au moins un autre monomère de manière à former un bloc thermoplastique ayant une Tg variant de 60°C à 200°C. Selon cet aspect, la fraction molaire en monomère polymérisé autre qu'un monomère styrénique, par rapport au nombre total de motifs du bloc thermoplastique, doit être suffisante pour atteindre une Tg variant préférentiellement de 60°C à 180°C, plus préférentiellement de 80°C à 150°C, encore plus préférentiellement de 100°C à 130°C. De manière préférentielle également, la Tg du bloc thermoplastique peut varier de 80°C à 150°C, ou de manière également préférentielle, de 60°C à 130°C, et plus préférentiellement encore, de 60°C à 110°C. Avantageusement la fraction molaire de cet autre co-monomère peut aller de 0 à 90%, plus préférentiellement de 0 à 75% et encore plus préférentiellement de 0 à 50%.

A titre d'illustration, cet autre monomère susceptible de copolymériser avec le monomère polymérisé autre qu'un monomère styrénique, peut être choisi parmi les monomères diènes, plus particulièrement, les monomères diènes conjugués ayant 4 à 14 atomes de carbone, et les monomères de type vinylaromatiques ayant de 8 à 20 atomes de carbone.

Lorsque le co-monomère est un diène conjugué ayant 4 à 14 atomes de carbone, il représente avantageusement une fraction molaire par rapport au nombre total de motifs du bloc thermoplastique allant de 0 à 25%. A titre de diènes conjugués utilisables dans les blocs thermoplastiques selon un objet de l'invention conviennent ceux décrit plus haut, à savoir l'isoprène, le butadiène, le 1-méthylbutadiène, le 2- méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 2,5-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,5-diméthyl-1,3-hexadiène, le 2-néopentylbutadiène, le 1,3-cyclopentadiène, le 1,3-cyclohexadiène, 1-vinyl-1,3-cyclohexadiène ou leurs mélanges.

Lorsque le co-monomère est de type vinylaromatique, il représente avantageusement une fraction en motifs sur le nombre total de motifs du bloc thermoplastique de 0 à 90%, préférentiellement allant de 0 à 75% et encore plus préférentiellement allant de 0 à 50%. A titre de composés vinylaromatiques conviennent notamment les monomères styréniques cités plus haut, à savoir les méthylstyrènes, le para-tertio-butylstyrène, les chlorostyrènes, les bromostyrènes, les fluorostyrènes ou encore le para-hydroxy-styrène. De préférence, le co-monomère de type vinylaromatique est le styrène.

On peut citer à titre d'exemples illustratifs mais non limitatifs, des mélanges de co-monomères et pouvant être utilisés pour la préparation de blocs thermoplastiques ayant une Tg supérieure ou égale à 100°C, constitués d'indène et de dérivés du styrène, notamment le para-méthylstyrène ou le para-tertiobutyle styrène. L'homme de l'art pourra alors se référer aux documents J.E. Puskas, G. Kaszas, J.P. Kennedy, W.G. Hager, Journal of Polymer Science part A : Polymer Chemistry 1992 30, 41 ou J.P. Kennedy, S. Midha, Y. Tsungae, Macromolecules (1993) 26, 429.

Préférentiellement, un élastomère thermoplastique TPNSI est un copolymère dibloc : bloc thermoplastique / bloc isobutylène. Plus préférentiellement encore, un tel élastomère thermoplastique TPNSI est un copolymère tribloc : bloc thermoplastique / bloc isobutylène / bloc thermoplastique.

L'élastomère TPEI (et préférentiellement l'élastomère TPSI tel que défini ci-dessus), est préférentiellement le seul élastomère thermoplastique constituant de la couche flanc externe, il est optionnellement étendu avec une huile d'extension telle que par exemple une huile polybutène.

La quantité d'élastomère TPEI (et préférentiellement d'élastomère TPSI tel que défini ci-dessus) dans le flanc externe de pneumatique utile aux besoins de l'invention, est de 1 à 99 pce. Préférentiellement, ce taux est de 1 à 80 pce, plus préférentiellement de 1 à 60 pce, de manière plus préférentielle de 5 à 60 pce. Plus préférentiellement, ce taux est de 5 à 50 pce, en particulier de 5 à moins de 50 pce et encore plus préférentiellement de 10 à 40 pce.

### I-1-C. Charge renforçante

Lorsqu'une charge renforçante est utilisée, on peut utiliser tout type de charge renforçante connue pour ses capacités à renforcer une composition de caoutchouc utilisable pour la fabrication de pneumatiques, par exemple une charge organique telle que du noir de carbone, une charge inorganique renforçante telle que de la silice, ou encore un coupage de ces deux types de charges, notamment un coupage de noir de carbone et de silice.

Comme noirs de carbone conviennent tous les noirs de carbone conventionnellement utilisés dans les pneumatiques (noirs dits de grade pneumatique). Par exemple, on citera plus particulièrement les noirs de carbone renforçants de grade ASTM N326, N330, N339, N347, N375, ou encore, selon les applications visées, les noirs de séries plus élevées (par exemple N550, N660, N683, N772), voire même N990.

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés dits "symétriques" répondant à la formule générale (III) suivante:

(III) Z - A - Sₓ - A - Z ,

dans laquelle:
- x est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 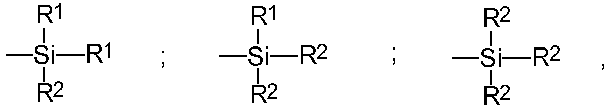 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (III) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfurés, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfurés, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 (ou US 2004/132880).

A titre d'agent de couplage autre qu'alkoxysilane polysulfuré, on citera notamment des POS (polyorganosiloxanes) bifonctionnels ou encore des polysulfures d'hydroxysilane (R² = OH dans la formule III ci-dessus) tels que décrits dans les demandes de brevet WO 02/30939 (ou US 6,774,255) et WO 02/31041 (ou US 2004/051210), ou encore des silanes ou POS porteurs de groupements fonctionnels azo-dicarbonyle, tels que décrits par exemple dans les demandes de brevet WO 2006/125532, WO 2006/125533, WO 2006/125534.

Enfin, l'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère.

Le taux de charge renforçante totale (noir de carbone et/ou charge inorganique renforçante telle que silice) est compris dans un domaine de 0 à 120 pce, plus préférentiellement de 0 à 90 pce, plus particulièrement de 5 à 80 pce ou de 0 à 70 pce et très préférentiellement de 5 à 70 pce, l'optimum étant bien entendu différent selon les applications particulières visées, et selon le type de noir de carbone utilisé. Il est clair que des noirs de carbone de grade ASTM très élevé, tel que le noir de carbone N990, sont moins renforçants que des noirs de carbone de grade 700, et à fortiori 600, et qu'il est nécessaire pour un renforcement identique d'utiliser des taux plus importants de noir de carbone s'il s'agit de noirs de carbone de grade 900 que s'il s'agit de noirs de grade 600 ou 700.

Plus préférentiellement la proportion de noir de carbone varie de 0 à 90 pce (préférentiellement de 0 à 70 pce), en particulier dans le cas de l'utilisation de noirs de carbone de grade ASTM 600 ou 700, et encore plus préférentiellement cette proportion varie de 5 à 70 pce, particulièrement de 10 à 65 pce. De telles quantités représentent un taux volumique variant de 0 à 30% dans la composition, préférentiellement de 1 à 25%.

Le noir de carbone peut avantageusement constituer la seule charge renforçante ou la charge renforçante majoritaire (c'est-à-dire celle dont le taux est le plus important, par exemple à 50 % du poids total de charge renforçante ou plus dans un mélange de deux types de charges). Bien entendu on peut utiliser un seul noir de carbone ou un coupage de plusieurs noirs de carbone de grades ASTM différents. Le noir de carbone peut être également utilisé en coupage avec d'autres charges renforçantes et en particulier des charges inorganiques renforçantes telles que décrites précédemment, et en particulier de la silice. Préférentiellement le noir de carbone est la seule charge renforçante dans la composition de flanc externe.

Lorsqu'une charge inorganique (par exemple de la silice) est utilisée dans la composition, seule ou en coupage avec du noir de carbone, son taux est compris dans un domaine de 0 à 120 pce (préférentiellement de 0 à 110 pce), en particulier également de 0 à 60 pce, et encore plus préférentiellement cette proportion varie de 0 à 30 pce, particulièrement de 5 à 20 pce.

### I-1-D. Plastifiants

L'élastomère diénique, l'élastomère thermoplastique et la charge décrits précédemment sont suffisants à eux seuls pour que soient remplies les fonctions des flancs externes des objets pneumatiques dans lesquels ils sont utilisés.

Toutefois, selon un mode de réalisation préférentiel de l'invention, la composition élastomère précédemment décrite comporte également, un agent plastifiant, dont la fonction est de faciliter la mise en oeuvre du flanc externe, particulièrement son intégration dans l'objet pneumatique par un abaissement du module et une augmentation du pouvoir tackifiant.

On peut utiliser tout type de plastifiant qui peut être une résine ou une huile d'extension. La dénomination "résine" est réservée dans la présente demande, par définition connue de l'homme du métier, à un composé qui est solide à température ambiante (23°C), par opposition à un composé plastifiant liquide tel qu'une huile d'extension ou huile plastifiante. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

Les résines hydrocarbonées sont des polymères bien connus de l'homme du métier, essentiellement à base de carbone et hydrogène, utilisables en particulier comme agents plastifiants dans des matrices polymériques. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont par définition miscibles (i.e., compatibles) aux taux utilisés avec les compositions de polymères auxquelles elles sont destinées, de manière à agir comme de véritables agents diluants. Leur Tg est de préférence supérieure à 0°C, notamment supérieure à 20°C (le plus souvent comprise entre 30°C et 120°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "softening point"), température à laquelle le produit, par exemple sous forme de poudre, s'agglutine. La température de ramollissement d'une résine hydrocarbonée est généralement supérieure d'environ 50 à 60°C à sa valeur de Tg.

A titres d'exemples de telles résines hydrocarbonées, on peut citer celles choisies dans le groupe constitué par les résines d'homopolymère ou copolymère de cyclopentadiène (en abrégé CPD) ou dicyclopentadiène (en abrégé DCPD), les résines d'homopolymère ou copolymère terpène, les résines d'homopolymère ou copolymère terpène phénol, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, béta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C9 (ou plus généralement d'une coupe C8 à C10).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, par la société Struktol sous dénomination "40 MS" ou "40 NS" (mélanges de résines aromatiques et/ou aliphatiques) ou encore par la société Eastman, sous la dénomination "Eastotac", telles que "Eastotac H-142W" pour ce qui concerne les résines d'hydrocarbone aliphatique hydrogénées.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles. Par exemple, l'huile d'extension peut être une huile polybutène et en particulier une huile polyisobutylène.

Si l'on a constaté que l'ajout d'huile se faisait certes au prix d'une certaine perte d'étanchéité, variable selon le type et la quantité d'huile utilisée, cette perte d'étanchéité peut être largement corrigée notamment par ajout d'une charge lamellaire.

La masse moléculaire moyenne en nombre (Mn) de l'huile d'extension est préférentiellement comprise entre 200 et 25 000 g/mol, plus préférentiellement encore comprise entre 300 et 10 000 g/mol. Pour des masses Mn trop basses, il existe un risque de migration de l'huile à l'extérieur de la composition, tandis que des masses trop élevées peuvent entraîner une rigidification excessive de cette composition. Une masse Mn comprise entre 350 et 4 000 g/mol, en particulier entre 400 et 3 000 g/mol, s'est avérée constituer un excellent compromis pour les applications visées, en particulier pour une utilisation dans un bandage pneumatique.

La masse moléculaire moyenne en nombre (Mn) de l'huile d'extension est déterminée par SEC, l'échantillon étant préalablement solubilisé dans du tétrahydrofurane à une concentration d'environ 1 g/l ; puis la solution est filtrée sur filtre de porosité 0,45 µm avant injection. L'appareillage est la chaîne chromatographique « WATERS alliance ». Le solvant d'élution est le tétrahydrofurane, le débit de 1 ml/min, la température du système de 35°C et la durée d'analyse de 30 min. On utilise un jeu de deux colonnes « WATERS » de dénomination « STYRAGEL HT6E ». Le volume injecté de la solution de l'échantillon de polymère est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

L'homme du métier saura, à la lumière de la description et des exemples de réalisation qui suivent, ajuster la quantité de plastifiant en fonction de l'élastomère TPEI utilisé (comme indiqué précédemment), des propriétés de la composition de flanc externe, des conditions particulières d'usage du flanc externe, et notamment en fonction de l'objet pneumatique dans lequel elle est destinée à être utilisée.

Lorsqu'il est utilisé, on préfère que le taux de plastifiant varie de 2 à 60 pce, plus préférentiellement de 3 à 50 pce. En dessous du minimum indiqué, la présence de plastifiant n'est pas sensible. Au-delà du maximum préconisé, on s'expose à un risque de cohésion insuffisante de la composition et de perte d'étanchéité pouvant être néfaste selon l'application considérée.

### I-1-E. Charge lamellaire

L'utilisation optionnelle de charge lamellaire permet avantageusement d'abaisser le coefficient de perméabilité (donc d'augmenter l'étanchéité) de la composition élastomère, sans augmenter de façon excessive son module, ce qui permet de conserver la facilité d'intégration du flanc externe dans l'objet pneumatique.

Les charges dites lamellaires (en anglais "platy fillers") sont bien connues de l'homme du métier. Elles ont été utilisées notamment dans des bandages pneumatiques pour réduire la perméabilité des couches étanches conventionnelles à base de caoutchouc butyl. Elles sont généralement utilisées à des taux relativement faibles, n'excédant pas le plus souvent 1 à 50 pce, soit des taux volumiques variables, notamment de 0,1 à 25% en volume de composition élastomère, et de préférence de 1 à 20% en volume.

Elles se présentent généralement sous forme de plaques, plaquettes, feuilles ou feuillets empilés, avec une anisométrie plus ou moins marquée. Leur rapport de forme (F = L/E) est généralement supérieur à 3, plus souvent supérieur à 5 ou à 10, L représentant la longueur (ou plus grande dimension) et E l'épaisseur moyenne de ces charges lamellaires, ces moyennes étant calculées en nombre. Des rapports de forme atteignant plusieurs dizaines voire centaines sont fréquents. Leur longueur moyenne est de préférence supérieure à 1 µm (c'est-à-dire qu'il s'agit alors de charges lamellaires dites micrométriques), typiquement comprise entre quelques µm (par exemple 5 µm) et quelques centaines de µm (par exemple 500 voire 800 µm).

Préférentiellement, les charges lamellaires utilisées conformément à l'invention sont choisies dans le groupe constitué par les graphites, les charges minérales lamellaires à base de silicium et les mélanges de telles charges.

Par graphite, on entend de manière générale un ensemble de feuillets hexagonaux non compacts d'atomes de carbone : les graphènes. Le graphite, système cristallin hexagonal, présente un empilement de type ABAB où le plan B est translaté par rapport au plan A.

Le graphite ne peut pas être considéré comme une charge renforçante au sens de la définition précisée dans le paragraphe I-1-B, cependant il peut être considéré comme une charge semi-renforçante (ou partiellement renforçante) dans la mesure où il permet une augmentation du module en traction d'une composition de caoutchouc dans laquelle il est incorporé.

Ces définitions étant données, on entend plus particulièrement par graphite susceptible d'être utilisé dans les compositions conformes à l'invention :
(a) tout graphite naturel, associé aux roches affectées par le métamorphisme, après séparation des impuretés accompagnant les veines de graphite et après broyage;
(b) tout graphite naturel expansable thermiquement, i.e. dans lequel est intercalé un ou plusieurs composés chimiques à l'état liquide, par exemple un acide, entre ses plans de graphène;
(c) tout graphite naturel expansé, ce dernier étant réalisé en deux temps : intercalation d'un ou plusieurs composés chimiques à l'état liquide, par exemple un acide, entre les plans de graphène d'un graphite naturel par traitement chimique et expansion à haute température ;
(d) tout graphite synthétique obtenu par graphitisation de coke de pétrole.

Les compositions de l'invention peuvent contenir un seul graphite ou un mélange de plusieurs graphites, ainsi on peut avoir un coupage de graphite naturel et/ou de graphite expansé et/ou de graphite synthétique.

Le graphite tel que défini précédemment, peut se présenter sur un plan morphologique sous une forme lamellaire ou non, et sera dans les deux cas assimilé à une charge lamellaire au sens de la présente invention.

On a constaté de façon surprenante que les graphites avec n'importe lequel de ces deux types de morphologie convenaient dans les compositions conformes à l'invention, cependant les graphites présentant une forme lamellaire conviennent préférentiellement, et d'autant plus lorsqu'ils sont orientés de manière a présenter leur plus grande face perpendiculairement au flux de perméation de gaz.

Lorsqu'il est utilisé, le graphite est présent dans la composition à des taux allant de 1 pce à 60 pce, et de préférence entre 5 et 30 pce.

En particulier parmi les charges minérales lamellaires à base de silicium conviennent les phyllosilicates et particulièrement celles comprises dans le groupe constitué par les smectites, le kaolin, le talc, le mica et la vermiculite.

Parmi les phyllosilicates conviennent également pour l'invention, les phyllosilicates fonctionnalisées et en particulier organo-modifiées. Selon un mode de réalisation particulier, la structure organique à laquelle est associée la charge inerte est un surfactant de formule : -M⁺R¹R²R³- ; où M représente un atome d'azote, de soufre, de phosphore ou de pyridine, et où R¹, R², et R³ représente un atome d'hydrogène, un groupe alkyle, un groupe aryle ou un groupe allyle, R¹, R², et R³ étant identiques ou différents.

En particulier, des montmorillonites organo-modifiées conviennent pour l'invention. Ainsi des montmorillonites modifiées avec un surfactant tel qu'un sel d'ammonium quaternaire dioctadecyldiméthyl-dihydrogéné. Une telle montmorillonite organo-modifiée est commercialisée notamment par la Société Southern Clay Products sous la dénomination commerciale : « CLOISITE 6A et 20A ».

D'autres surfactants à base de sels d'ammonium quaternaire peuvent être encore utilisés pour modifier les phyllosilicates tels que décrits dans la demande de brevet WO06/047509.

Comme exemples de micas, on peut citer les micas commercialisés par la société CMMP (Mica-MU®, Mica-Soft®, Briomica® par exemple), ceux commercialisés par la société YAMAGUCHI (A51S, A41S, SYA-21R, SYA-21RS, A21S, SYA-41R), les vermiculites (notamment la vermiculite Shawatec® commercialisée par CMMP ou la vermiculite Microlite® commercialisée par W.R. Grace), les micas modifiés ou traités (par exemple, la gamme Iriodin® commercialisée par Merck). Comme exemples de graphites, on peut citer les graphites commercialisés par la société Timcal (gamme Timrex®). Comme exemple de talcs, on peut citer les talcs commercialisés par la société Luzenac.

Les charges inertes précitées, autres que le graphite sont en effet particulièrement intéressantes car elles permettent d'améliorer l'imperméabilité des compositions dans lesquelles elles sont dispersées avec un taux adéquat. Par exemple, lorsqu'elles sont utilisées, leur taux peut varier de 1 pce à 80 pce, et de préférence de 3 à 40 pce.

L'introduction des charges lamellaires dans la composition élastomère peut être réalisée selon divers procédés connus, par exemple par mélangeage en solution, par mélangeage en masse dans un mélangeur interne, ou encore par mélangeage par extrusion.

### I-1-F. Système de réticulation

Le système de réticulation peut être un système de vulcanisation, il est préférentiellement à base de soufre (ou donneur de soufre) et d'un accélérateur primaire de vulcanisation. A ce système de vulcanisation viennent optionnellement s'ajouter, divers accélérateurs secondaires ou activateurs de vulcanisation connus (préférentiellement pour 0,5 à 5,0 pce chacun) tels qu'oxyde de zinc, acide stéarique, dérivés guanidiques (en particulier diphénylguanidine), etc. Le soufre ou un donneur de soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à un flanc externe de pneumatique. Parmi les donneurs de soufre on peut citer par exemple les alkyl phénol disulfures (APDS) tel que par exemple le disulfure de para-tertiobutylphénol.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### I-1-G. Additifs divers

La composition de flanc externe décrite précédemment peut comporter par ailleurs les divers additifs usuellement présents dans les flancs externes connues de l'homme du métier. On citera par exemple des charges non renforçantes ou inertes autres que les charges lamellaires précédemment décrites, des plastifiants autres que les huiles d'extension précitées, des résines tackifiantes, des agents de protection tels que antioxydants ou antiozonants, anti-UV, divers agents de mise en oeuvre ou autres stabilisants, ou encore des promoteurs aptes à favoriser l'adhésion au reste de la structure de l'objet pneumatique.

Outre les élastomères (diénique ou TPEI) précédemment décrits, la composition de flanc externe pourrait aussi comporter, toujours selon une fraction pondérale minoritaire par rapport à l'élastomère blocs, des polymères autres que des élastomères, tels que par exemple des polymères thermoplastiques.

### I-2. Préparation du flanc externe de l'invention

Afin de préparer le flanc externe selon l'invention, on procède au mélange des élastomères avec les autres composants du flanc externe soit la charge renforçante, ainsi que le système de réticulation et les éventuels autres ingrédients, tels que les plastifiants. Afin d'obtenir une bonne dispersion de l'élastomère thermoplastique au sein de la composition, celui-ci doit être chauffé à une température suffisante, par exemple 60 à 200°C, préférentiellement 80 à 180°C, pour que la température de mélangeage atteigne la température de ramollissement des blocs thermoplastiques du TPEI. Le chauffage pendant suffisamment longtemps, par exemple 3 à 20 minutes, préférentiellement 5 à 15 minutes, permet que le TPEI, ramolli par la température élevée, puisse être dispersé de façon homogène dans le mélange, de préférence sous la forme de domaines n'excédant pas quelques microns. Il est possible de faciliter l'opération en introduisant le TPEI sous une forme « poudre fine », ou en le pré-diluant avec un plastifiant. A la lumière de ce qui suit, l'homme du métier pourra adapter l'ordre d'incorporation des ingrédients (en une fois ou en plusieurs étapes successives), la température et le temps de mélangeage, et, si besoin, le taux de plastifiant, en fonction de la température de ramollissement de l'élastomère thermoplastique choisi.

Ainsi, l'invention concerne également un procédé de fabrication d'un objet pneumatique tel que défini précédemment, dans lequel la composition de caoutchouc du flanc externe est fabriquée selon un procédé comportant au moins une étape de mélangeage des élastomères de la composition et de la charge renforçante, à une température variant de 60 à 200°C, (préférentiellement 80 à 180°C) pendant 3 à 20 minutes, (préférentiellement 5 à 15 minutes).

Les préférences décrites pour les compositions des flancs externes des pneumatiques selon l'invention, s'appliquent mutatis mutandis au procédé tel que décrit précédemment.

Selon un premier mode de réalisation, on procède pour les essais de la manière suivante : on introduit dans un mélangeur interne, rempli à environ 70% (plus ou moins 5%) et dont la température initiale de cuve est comprise entre 40°C et 80°C, successivement le ou les élastomères diéniques, le ou les élastomères thermoplastiques à bloc polyisobutylène, la ou les charges renforçantes, ainsi que les éventuels autres ingrédients à l'exception du système de vulcanisation. On conduit alors un travail thermomécanique (phase non-productive) en une étape, qui dure au total environ 3 à 4 minutes, jusqu'à atteindre une température maximale de « tombée » de 150°C.

On récupère le mélange ainsi obtenu, on le refroidit puis on incorpore du soufre et un accélérateur sur un mélangeur externe (homo-finisseur) à 30°C, en mélangeant le tout (phase productive) pendant un temps approprié (par exemple entre 5 et 12 min).

Si ce premier mode de réalisation est utilisé, on choisira pour une mise en oeuvre facilitée, un élastomère TPEI possédant une température de ramollissement (mesuré selon la norme ISO 4625, méthode "Ring and Ball") inférieure ou égale à 150°C. Si pour d'autres raisons, le TPEI choisi possède une température de ramollissement supérieure à 130°C ou à 150°C, on pourra alors, incorporer un taux d'huile d'extension au TPEI afin de permettre une bonne mise en oeuvre du mélange à une température inférieure ou égale à 130°C ou à 150°C respectivement. Dans ces cas, on préparera par exemple un masterbatch en mélangeant le TPEI et une huile d'extension (par exemple à l'aide d'une extrudeuse bi-vis), masterbatch que l'on pourra utiliser dans le procédé décrit ci-dessus. Lorsqu'un élastomère TPEI dont le point de ramollissement est inférieur ou égal à 150°C est utilisé, on préfère que le taux d'huile d'extension varie de 2 à 15 pce, notamment de 2 à 10 pce. Lorsqu'un élastomère TPEI dont le point de ramollissement est supérieur à 150°C est utilisé, on préfère que le taux total d'huile d'extension, c'est-à-dire le taux d'huile incorporée au TPEI ajouté au taux d'huile éventuellement incorporée au mélange élastomérique initial varie de 5 à 50 pce, plus préférentiellement de 10 à 40 pce, notamment de 15 et 30 pce.

Selon un autre mode de réalisation, tous les composants y compris le système de vulcanisation peuvent être introduits successivement dans le mélangeur interne tel que décrit ci-dessus. Dans ce cas le mélange doit se faire jusqu'à une température de « tombée » inférieure ou égale à 130°C, préférentiellement inférieure ou égale à 120°C et notamment inférieure ou égale à 110°C.

Si ce deuxième mode de réalisation est utilisé, on choisira pour une mise en oeuvre facilitée, un élastomère TPEI possédant une température de ramollissement (mesuré selon la norme ISO 4625, méthode "Ring and Ball") inférieure ou égale à 130°C, préférentiellement inférieure à 120°C et notamment inférieure à 110°C. Si pour d'autres raisons, le TPEI choisi possède une température de ramollissement supérieure à 130°C, on pourra alors, incorporer un taux d'huile d'extension au TPEI afin de permettre une bonne mise en oeuvre du mélange à une température inférieure ou égale à 130°C, dans ce cas, on préparera par exemple un masterbatch en mélangeant le TPEI et une huile d'extension (par exemple à l'aide d'une extrudeuse bi-vis), masterbatch que l'on pourra utiliser dans le procédé décrit ci-dessus. Lorsqu'un élastomère TPEI dont le point de ramollissement est inférieur ou égal à 130°C est utilisé, on préfère que le taux d'huile d'extension varie de 2 à 15 pce, notamment de 2 à 10 pce. Lorsqu'un élastomère TPEI dont le point de ramollissement est supérieur à 130°C est utilisé, on préfère que le taux total d'huile d'extension, c'est-à-dire le taux d'huile incorporée au TPEI ajouté au taux d'huile éventuellement incorporée au mélange élastomérique initial varie de 5 à 50 pce, plus préférentiellement de 10 à 40 pce, notamment de 15 et 30 pce.

Dans certains modes de réalisation alternatifs, un ou plusieurs des élastomères (diénique et/ou thermoplastique) utilisés dans la composition peuvent être introduits sous forme de « masterbatch » ou prémélangés avec certains des composants de la composition.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de flancs externes de pneumatique.

### I-3. Utilisation du flanc externe dans un bandage pneumatique

Le flanc externe précédemment décrite est particulièrement bien adaptée à une utilisation comme produit fini ou semi-fini, en caoutchouc, tout particulièrement dans un bandage pneumatique pour véhicule automobile tel qu'un véhicule de type deux roues, tourisme ou industriel.

On comprendra aisément que, selon les domaines d'application spécifiques, les dimensions et les pressions enjeu, le mode de mise en oeuvre de l'invention peuvent varier, le flanc externe comporte alors plusieurs modes d'utilisation préférentiels.

### II. EXEMPLES DE RÉALISATION DE L'INVENTION

Le flanc externe précédemment décrit est avantageusement utilisable dans les bandages pneumatiques de tous types de véhicules, en particulier véhicules tourisme ou véhicules industriels tels que les poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs externes 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Le bandage pneumatique conforme à l'invention peut utiliser par exemple pour la composition de son flanc externe tel que défini ci-dessus, une composition comportant en particulier un élastomère thermoplastique à bloc isobutylène tel que le SIBS "Sibstar 102 T" commercialisé par la société Kaneka.

Le pneumatique pourvu de son flanc externe tel que décrit ci-dessus est de préférence réalisé avant vulcanisation (ou cuisson). La vulcanisation est ensuite effectuée classiquement. Les élastomères blocs supportent bien les contraintes liées à l'étape de vulcanisation.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique, selon des techniques de fabrication bien connues de l'homme du métier.

### II-1. Tests

Les propriétés des compositions élastomères et de certains de leurs constituants sont caractérisées comme indiqué ci-après.

### II-1-A. Tests d'étanchéité

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standard sous forme de disque (par exemple de diamètre 65 mm dans le cas présent) et d'épaisseur uniforme pouvant aller jusqu'à 1,5 mm (0,5 mm dans le cas présent). Le capteur de pression est connecté à une carte d'acquisition de données *National Instruments* (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps. Une valeur arbitraire de 100 est donnée pour la l'étanchéité à l'air du témoin, un résultat supérieur à 100 indiquant une augmentation de l'étanchéité à l'air donc une diminution de la perméabilité.

### II-1-B. Mesure de contrainte rupture à cru et à cuit (ou avant et après cuisson)

Des essais de traction à la rupture ont été réalisés avant et après cuisson des mélanges sur des éprouvettes ASTM C, à température ambiante. Ces essais de traction permettent de déterminer les propriétés à la rupture et notamment la contrainte nominale à la rupture ainsi que la déformation à rupture. Les résultats donnés dans les exemples qui suivent correspondent à la contrainte nominale à la rupture et sont exprimés en base 100, c'est-à-dire qu'une valeur arbitraire de 100 est donnée pour la contrainte rupture du témoin, un résultat supérieur à 100 indiquant une augmentation de la contrainte rupture et inversemment.

### II-2. Essais

Des compositions conventionnelles de flanc externe, contenant des élastomères usuels, des charges renforçantes et des additifs usuels ont été préparées comme témoins (A1).

### II-2-A. EXEMPLE A

Les compositions préparées comportent le même taux de tous les ingrédients excepté les élastomères. La composition témoin A1 ne comporte pas de TPEI tandis que dans la composition A2 conforme à l'invention, le taux d'élastomères diéniques est abaissé pour ajouter une part de TPEI dans la composition. L'autre composition témoin A3 correspond à la composition selon l'invention, dans laquelle le TPEI est remplacé par un élastomère diénique essentiellement saturé de type butyle.

Des tests d'étanchéité, et de mesure de la contrainte rupture tels que précédemment décrits ont été effectués sur ces compositions. Le tableau 1 présente l'ensemble des compositions ainsi que les performances d'étanchéité et de contrainte rupture en base 100. La composition A1 est prise comme référence et les taux sont tous exprimés en pce.

**Tableau 1**

| *Composition N°:* | *A1* | *A2* | *A3* |
|---|---|---|---|
| *NR (1)* | *35* | *24* | *24* |
| *BR (2)* | *65* | *46* | *46* |
| *SIBS (3)* | *0* | *30* | *0* |
| *IIR (4)* | *0* | *0* | *30* |
| *Noir de carbone (5)* | *61* | *61* | *61* |
| *Plastifiant (6)* | *27* | *27* | *27* |
| *Antioxydant (7)* | *4* | *4* | *4* |
| *Acide stéarique* | *1* | *1* | *1* |
| *ZnO* | *3* | *3* | *3* |
| *Soufre* | *2* | *2* | *2* |
| *Accélérateur (8)* | *1* | *1* | *1* |
| *Etanchéité relative* | *100* | *140* | *115* |
| *Performance contrainte rupture à cuit* | *100* | *97* | *95* |
| *Performance contrainte rupture à cru* | *100* | *96* | *31* |

| | | | |
|---|---|---|---|
| (1) NR caoutchouc naturel (2) BR avec 0,5% de motifs 1,2 ; 1,2% de trans ; 98,3% de cis 1,4 (Tg = - 106°C) (3) SIBS « Sibstar 102 T» commercialisé par la société Kaneka (4) IIR « Butyl 365 » commercialisé par la société Exxon (5) Grade ASTM N683 commercialisé par la société Cabot (6) Huile MES « Catenex SNR » commercialisé par la société Shell (7) N-(1,3-diméthylbutyl)-N'-phényl-p-phénylènediamine « 6-PPD » de la société Flexsys (8) N-cyclohexyl-2-benzothiazol-sulfénamide « Santocure CBS » de la société Flexsys | | | |

Les résultats présentés au tableau 1 montrent un gain très significatif de la performance étanchéité de la compositions A2 par rapport à la performance de la composition A1. La composition A3 présente un avantage nettement plus faible par rapport à la composition A1. En terme de performance contrainte rupture à cuit, les compositions A1, A2 et A3 sont assez similaires, tandis qu'à cru, il apparaît que la composition A2 du flanc externe selon l'invention est similaire que le témoin A1 tandis que la composition A3 présente une performance bien moindre. Cette performance de contrainte rupture à cru est particulièrement avantageuse pour la fabrication des couches internes, et notamment des semi-finis.

### II-2-B. EXEMPLE B

Les compositions préparées comportent le même taux de tous les ingrédients excepté les élastomères. La composition témoin B1 ne comporte pas de TPEI tandis que dans les compositions B2 à B7 conformes à l'invention, le taux d'élastomère diénique est abaissé pour ajouter une part de TPEI dans la composition.

Des tests d'étanchéité, et de mesure de la contrainte rupture tels que précédemment décrits ont été effectués sur ces compositions. Le tableau 2 présente l'ensemble des compositions ainsi que les performances d'étanchéité et de contrainte rupture en base 100. La composition B1 est prise comme référence et les taux sont tous exprimés en pce.

**Tableau 2**

| *Composition N°:* | *B1* | *B2* | *B3* | *B4* | *E5* | *B6* | *B7* |
|---|---|---|---|---|---|---|---|
| *NR (1)* | *35* | *33* | *28* | *24* | *21* | *17* | *14* |
| *BR (2)* | *65* | *62* | *52* | *46* | *39* | *33* | *26* |
| *SIBS (3)* | *0* | *5* | *20* | *30* | *40* | *50* | *60* |
| *Noir de carbone (4)* | *61* | *61* | *61* | *61* | *61* | *61* | *61* |
| *Plastifiant (5)* | *27* | *27* | *27* | *27* | *27* | *27* | *27* |
| *Antioxydant (6)* | *4* | *4* | *4* | *4* | *4* | *4* | *4* |
| *Acide stéarique* | *1* | *1* | *1* | *1* | *1* | *1* | *1* |
| *ZnO* | *3* | *3* | *3* | *3* | *3* | *3* | *3* |
| *Soufre* | *2* | *2* | *2* | *2* | *2* | *2* | *2* |
| *Accélérateur (7)* | *1* | *1* | *1* | *1* | *1* | *1* | *1* |
| *Etanchéité relative* | *100* | *105* | *128* | *140* | *148* | *167* | *167* |
| *Performance contrainte rupture à cuit* | *100* | *111* | *102* | *108* | *112* | *106* | *87* |

| | | | | | | | |
|---|---|---|---|---|---|---|---|
| (1) NR caoutchouc naturel (2) BR avec 0,5% de motifs 1,2 ; 1,2% de trans ; 98,3% de cis 1,4 (Tg = - 106°C) (3) SIBS « Sibstar 102 T» commercialisé par la société Kaneka (4) Grade ASTM N683 commercialisé par la société Cabot (5) Huile MES « Catenex SNR » commercialisé par la société Shell (6) N-(1,3-diméthylbutyl)-N'-phényl-p-phénylènediamine « 6-PPD » de la société Flexsys (7) N-cyclohexyl-2-benzothiazol-sulfénamide « Santocure CBS » de la société Flexsys | | | | | | | |

Les résultats présentés au tableau 2 montrent un gain significatif de la performance étanchéité des compositions B2 à B7 conformes à l'invention par rapport à la performance de la composition B1. En terme de contrainte rupture à cuit, les compositions B2 à B6 présentent une performance légèrement meilleure que la composition témoin, tandis que pour la composition B7, il apparaît que la performance baisse légèrement tout en gardant un niveau très acceptable selon les applications pneumatiques envisagées.

Ainsi, et de manière inattendue, l'invention apporte une solution aux manufacturiers permettant d'obtenir des flancs externes de pneumatique qui présentent une étanchéité améliorée tout en conservant de bonnes propriétés de contrainte rupture (voire même une performance améliorée), par rapport aux flancs externes utilisées industriellement.

## Revendications

1. Pneumatique pourvu d'un flanc externe, ledit flanc externe comprenant au moins une composition de caoutchouc comportant au moins, un ou plusieurs élastomères diéniques, à un taux total de 1 à 99 pce (parties en poids pour cent parties d'élastomère), un ou plusieurs élastomères thermoplastiques à bloc polyisobutylène, à un taux total de 1 à 99 pce, optionnellement une charge renforçante à un taux de 0 à 120 pce et un système de réticulation,
dans lequel la composition de caoutchouc dudit flanc externe, ne comprend pas d'élastomère polyisobutylénique, ou en comprend moins de 15 pce.

2. Pneumatique selon la revendication 1, dans lequel le taux d'élastomère thermoplastique à bloc polyisobutylène est de 1 à 80 pce, de préférence de 1 à 60 pce.

3. Pneumatique selon l'une quelconque des revendications 1 ou 2 dans lequel le taux d'élastomère thermoplastique à bloc polyisobutylène est de 5 à 60 pce, de préférence de 5 à 50 pce.

4. Pneumatique selon l'une quelconque des revendications 1 à 3, dans lequel le ou les élastomères diéniques sont choisis dans le groupe constitué par les élastomères diéniques essentiellement insaturés, et les mélanges de ces élastomères.

5. Pneumatique selon la revendication 4, dans lequel le ou les élastomères diéniques sont choisis dans le groupe constitué par les homopolymères obtenus par polymérisation d'un monomère diène conjugué ayant de 4 à 12 atomes de carbone, les copolymères obtenus par copolymérisation d'un ou plusieurs diènes conjugués entre eux ou avec un ou plusieurs composés vinyle aromatique ayant de 8 à 20 atomes de carbone, et les mélanges de ces derniers.

6. Pneumatique selon la revendication 5, dans lequel le ou les élastomères diéniques sont choisis dans le groupe constitué par les polybutadiènes, les polyisoprènes de synthèse, le caoutchouc naturel, les copolymères de butadiène, les copolymères d'isoprène et les mélanges de ces élastomères.

7. Pneumatique selon l'une quelconque des revendications 1 à 6, dans lequel le taux de charge renforçante est de 0 à 90 pce, de préférence de 5 à 80 pce.

8. Pneumatique selon l'une quelconque des revendications 1 à 6, dans lequel le taux de charge renforçante est de 0 à 70 pce, de préférence de 5 à 70 pce.

9. Pneumatique selon l'une quelconque des revendications 1 à 8, dans lequel la charge renforçante est du noir de carbone et/ou de la silice.

10. Pneumatique l'une quelconque des revendications 1 à 9, dans lequel le taux d'élastomère diénique est de 60 à 90 pce et le taux d'élastomère thermoplastique à bloc polyisobutylène est de 10 à 40 pce.

11. Pneumatique l'une quelconque des revendications 1 à 10, dans lequel la composition de caoutchouc dudit flanc externe, ne comprend pas d'élastomère polyisobutylénique, ou en comprend moins de 10 pce et plus préférentiellement moins de 5 pce.

## Patentansprüche

1. Reifen, der mit einer Außenseite versehen ist, wobei die Außenseite mindestens eine Kautschukzusammensetzung umfasst, die mindestens ein oder mehrere Dien-Elastomere in einem Gesamtanteil von 1 bis 99 phr (Teile pro hundert Teile Kautschuk), ein oder mehrere thermoplastische Polyisobutylen-Block-Elastomere in einem Gesamtanteil von 1 bis 99 phr, gegebenenfalls einen verstärkenden Füllstoff in einem Anteil von 0 bis 120 phr und ein Vernetzungssystem enthält,
wobei die Kautschukzusammensetzung der Außenseite kein Polyisobutylen-Elastomer enthält oder davon weniger als 15 phr enthält.

2. Reifen nach Anspruch 1, wobei der Anteil des thermoplastischen Polyisobutylen-Block-Elastomers 1 bis 80 phr, vorzugsweise 1 bis 60 phr beträgt.

3. Reifen nach einem der Ansprüche 1 oder 2, wobei der Anteil des thermoplastischen Polyisobutylen-Block-Elastomers 5 bis 60 phr, vorzugsweise 5 bis 50 phr beträgt.

4. Reifen nach einem der Ansprüche 1 bis 3, wobei das oder die Dien-Elastomer(e) aus der aus im Wesentlichen ungesättigten Dien-Elastomeren und Gemischen dieser Elastomere bestehenden Gruppe ausgewählt ist/sind.

5. Reifen nach Anspruch 4, wobei das oder die Dien-Elastomer(e) aus der aus Homopolymeren, die durch Polymerisation eines konjugierten Dienmonomers mit 4 bis 12 Kohlenstoffatomen erhalten werden, Copolymeren, die durch Copolymerisation von einem oder mehreren konjugierten Dien (en) miteinander oder mit einer oder mehreren aromatischen Vinylverbindungen mit 8 bis 20 Kohlenstoffatomen erhalten werden, und ihren Gemischen bestehenden Gruppe ausgewählt ist/sind.

6. Reifen nach Anspruch 5, wobei das oder die Dien-Elastomer(e) aus der aus Polybutadienen, synthetischen Polyisoprenen, Naturkautschuk, Butadien-Copolymeren, Isopren-Copolymeren und Gemischen dieser Elastomere bestehenden Gruppe ausgewählt ist/sind.

7. Reifen nach einem der Ansprüche 1 bis 6, wobei der Anteil an verstärkendem Füllstoff 0 bis 90 phr, vorzugsweise 5 bis 80 phr beträgt.

8. Reifen nach einem der Ansprüche 1 bis 6, wobei der Anteil an verstärkendem Füllstoff 0 bis 70 phr, vorzugsweise 5 bis 70 phr beträgt.

9. Reifen nach einem der Ansprüche 1 bis 8, wobei der verstärkende Füllstoff Ruß und/oder Siliziumdioxid ist.

10. Reifen nach einem der Ansprüche 1 bis 9, wobei der Anteil des Dien-Elastomers 60 bis 90 phr beträgt und der Anteil des thermoplastischem Polyisobutylen-Block-Elastomers 10 bis 40 phr beträgt.

11. Reifen nach einem der Ansprüche 1 bis 10, wobei die Kautschukzusammensetzung der Außenseite kein Polyisobutylen-Elastomer umfasst oder weniger als 10 phr und stärker bevorzugt weniger als 5 phr davon umfasst.

## Claims

1. Tyre provided with an external sidewall, the said external sidewall comprising at least one rubber composition comprising at least one or more diene elastomers, at a total content of 1 to 99 phr (parts by weight per hundred parts of elastomer), one or more thermoplastic elastomers having a polyisobutylene block, at a total content of 1 to 99 phr, optionally a reinforcing filler at a content of 0 to 120 phr and a crosslinking system,
wherein the rubber composition of the said external sidewall does not comprise a polyisobutylene elastomer or comprises less than 15 phr thereof.

2. Tyre according to Claim 1, in which the content of thermoplastic elastomer having a polyisobutylene block is from 1 to 80 phr, preferably from 1 to 60 phr.

3. Tyre according to either one of Claims 1 and 2, in which the content of thermoplastic elastomer having a polyisobutylene block is from 5 to 60 phr, preferably from 5 to 50 phr.

4. Tyre according to any one of Claims 1 to 3, in which the diene elastomer or elastomers are selected from the group consisting of essentially unsaturated diene elastomers and the mixtures of these elastomers.

5. Tyre according to Claim 4, in which the diene elastomer or elastomers are selected from the group consisting of the homopolymers obtained by polymerization of a conjugated diene monomer having from 4 to 12 carbon atoms, the copolymers obtained by copolymerization of one or more conjugated dienes with one another or with one or more vinylaromatic compounds having from 8 to 20 carbon atoms, and the mixtures of these.

6. Tyre according to Claim 5, in which the diene elastomer or elastomers are selected from the group consisting of polybutadienes, synthetic polyisoprenes, natural rubber, butadiene copolymers, isoprene copolymers and the mixtures of these elastomers.

7. Tyre according to any one of Claims 1 to 6, in which the content of reinforcing filler is from 0 to 90 phr, preferably from 5 to 80 phr.

8. Tyre according to any one of Claims 1 to 6, in which the content of reinforcing filler is from 0 to 70 phr, preferably from 5 to 70 phr.

9. Tyre according to any one of Claims 1 to 8, in which the reinforcing filler is carbon black and/or silica.

10. Tyre any one of Claims 1 to 9, in which the content of diene elastomer is from 60 to 90 phr and the content of thermoplastic elastomer having a polyisobutylene block is from 10 to 40 phr.

11. Tyre any one of Claims 1 to 10, in which the rubber composition of the said external sidewall does not comprise a polyisobutylene elastomer or comprises less than 10 phr and more preferentially less than 5 phr thereof.
